(19) Europäisches Patentamt
European Patent Office
Office européen des brevets

(11) **EP 1 874 601 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**20.09.2017 Patentblatt 2017/38**

(45) Hinweis auf die Patenterteilung:
**06.06.2012 Patentblatt 2012/23**

(21) Anmeldenummer: **06721213.4**

(22) Anmeldetag: **18.04.2006**

(51) Int Cl.:
**B60T 8/17** *(2006.01)*   **B60T 8/172** *(2006.01)*

(86) Internationale Anmeldenummer:
**PCT/AT2006/000155**

(87) Internationale Veröffentlichungsnummer:
**WO 2006/113954 (02.11.2006 Gazette 2006/44)**

(54) **ADAPTIVER GLEITSCHUTZ FÜR SCHIENENFAHRZEUGE MIT SCHLUPFREGLER**

ADAPTIVE SLIDE PROTECTION FOR RAIL VEHICLES HAVING SLIP CONTROL

DISPOSITIF ANTI-ENRAYEUR ADAPTATIF POUR DES VEHICULES FERROVIAIRES POURVUS D'UN REGULATEUR DE PATINAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.04.2005 AT 7332005**

(43) Veröffentlichungstag der Anmeldung:
**09.01.2008 Patentblatt 2008/02**

(73) Patentinhaber: **Siemens Aktiengesellschaft 80333 München (DE)**

(72) Erfinder:
• **STRIBERSKY, Anton**
**A-4906 Eberschwang (AT)**
• **LANG, Wolfram**
**91052 Erlangen (DE)**
• **RULKA, Wolfgang**
**81247 München (DE)**
• **STÜTZLE, Thorsten**
**52074 Aachen (DE)**
• **VIERECK, Uwe**
**52064 Aachen (DE)**

(56) Entgegenhaltungen:
EP-A- 0 818 372     DE-A1- 2 530 609
DE-A1- 4 333 281    DE-A1- 19 517 708
DE-A1- 19 519 767   DE-A1- 19 848 992
DE-B- 1 065 448     DE-B- 1 177 504
DE-C1- 4 210 576    DE-T2- 69 735 321
JP-A- H 115 533

EP 1 874 601 B2

**Beschreibung**

Die Erfindung betrifft ein Verfahren zur Anpassung des Bremszylinderdruckes einer pneumatischen Bremse eines Schienenfahrzeuges.

Außerdem betrifft die Erfindung noch ein Regelungssystem.

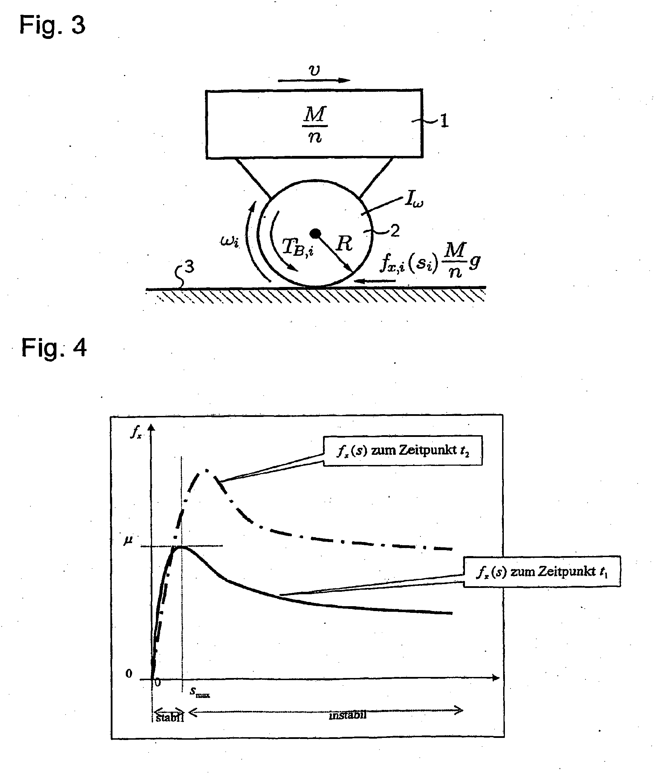

Die Notwendigkeit eines Gleitschutzes bei Schienenfahrzeugen resultiert aus der Gefahr des plötzlichen und unerwünschten Achsstillstands beim Abbremsen eines Schienenfahrzeugs. Um den Bremsvorgang zu initiieren, werden bei pneumatischen Bremssystemen die pneumatischen Bremszylinder an jeder Radachse mit einem Bremssteuerdruck beaufschlagt. Das so eingeleitete Bremsmoment TB bewirkt eine negative Winkelbeschleunigung der Räder. Dadurch entsteht in den Radaufstandsflächen eine Relativgeschwindigkeit $\Delta v$ zwischen Rad und Schiene und damit eine von der Relativgeschwindigkeit $\Delta v$ abhängige Reibungskraft, die das Fahrzeug verzögert. Die Kraft- und Drehmomentverhältnisse bei einem Bremsvorgang sind schematisch in Figur 3 dargestellt. Hierbei sind die Beziehungen mit der auf die Fahrgeschwindigkeit $v$ normierten Relativgeschwindigkeit, dem so genannten Schlupf $s = \Delta v / v$ dargestellt.

Die Reibungskraft ist das Produkt aus der vom Schlupf nichtlinear abhängigen Kraftschlussbeanspruchung fx und der Radaufstandskraft, wie in Figur 4 dargestellt. Mit zunehmendem Schlupf s steigt die Kraftschlussbeanspruchung fx schnell an und fällt nach Erreichen ihres Maximums langsam ab. Der Maximalwert $\mu$ der Kraftschlussbeanspruchung ist bei trockener Schiene am größten und verringert sich deutlich, wenn schlechte Witterungsbedingungen vorherrschen. Findet der Bremsvorgang auf dem ansteigenden Ast einer fx-Schlupfkurve statt, so ist er stabil. Beim Überschreiten des Maximums durch einen zu hohen Schlupfwert wird die Regelstrecke instabil - das Rad verzögert sehr schnell und steht still. Dabei entsteht ein verlängerter Bremsweg und eine unerwünschte Flachstelle am Rad.

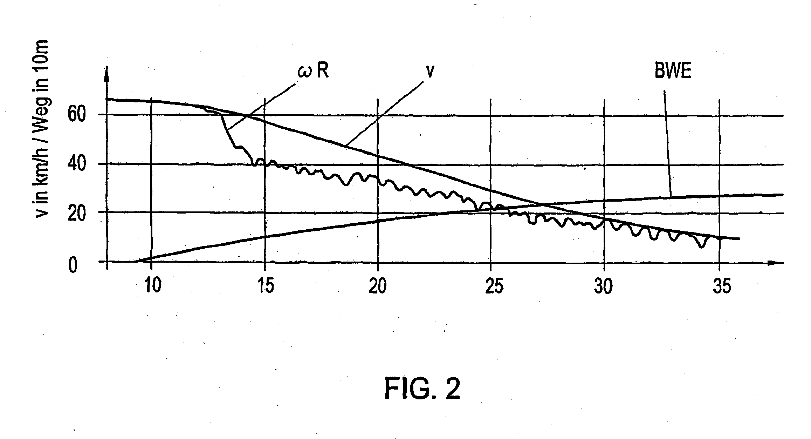

Der Bereich links des Maximums in Figur 2 wird auch als "Mikroschlupf" bezeichnet, der Bereich rechts des Maximums als "Makroschlupf".

Moderne Gleitschutzsysteme sollen bei verschiedenen Witterungsbedingungen einerseits den Achsstillstand verhindern, andererseits eine Kraftschlusshochausnutzung des Kontaktes zwischen Rad und Schiene (und damit einen möglichst kurzen Bremsweg) erreichen.

Handelsübliche Gleitschutzsysteme nach dem Stand der Technik nutzen wissensbasierte Regler, die den aktuellen Zustand anhand einer geeigneten Auswertung von Messgrößen beurteilen, die passende Reaktion aus einer Entscheidungstabelle entnehmen und als Pulsfolgen an die Gleitschutzventile umsetzen. Für jede Schienenfahrzeugserie ist eine individuelle Anpassung der vielen Reglerparameter erforderlich, die nur von Gleitschutzexperten mit Fachwissen und Erfahrung durchgeführt werden kann. Die notwendigen Testfahrten sind sehr zeitaufwändig und teuer.

Die DE 253 06 09 A1 offenbart ein Gleitschutzsystem, bei dem mittels eines Messfühlers eine Fahrzeuggeschwindigkeit ermittelt und mit Hilfe eines fest vorgegebenen Schlupfsollwertes aus der gemessenen Fahrzeuggeschwindigkeit eine Radsollgeschwindigkeit berechnen, die als Führungsgröße für die Regelung der Radgeschwindigkeit dient. Die Radsollgeschwindigkeit wird mit einer gemessenen Radistgeschwindigkeit verglichen, wobei aus der daraus gebildeten Regelabweichung ein Regler einen Bremsdruck bereitstellt. Der Bremsdruck wird mittels Magnetventilen und einen Impulsweitenmodulator im Bremszylinder eingestellt.

Die EP 0 818 372 A2 beschreibt ebenfalls ein System für die Antriebs- und Bremssteuerung eines Schienenfahrzeuges, wobei ein Radbeanspruchungsbegrenzer zur Begrenzung der Radbeanspruchung des Schienenfahrzeugs vorgesehen ist. Dabei empfängt der Radbeanspruchungsbegrenzer Messwerte, welche die Radbeanspruchung beschreiben. Anschließend wird der Bremse ein Sollwert für die nachgeschaltete Antriebs- und Bremssteuerung vorgegeben.

Die DE 198 48 992 A1 beschreibt ein Bremssystem für ein Schienenfahrzeug, bei dem ein pneumatisches Bremssystem mit einer elektronischen Regelung gekoppelt ist.

Die DE 195 19 767 A1 beschreibt ein Verfahren zum Erzeugen eines translatorischen Geschwindigkeitssignals eines Fahrzeuges, das einer Schlupfregelung als Referenzgeschwindigkeitssignal zugeführt wird.

Es ist eine Aufgabe der Erfindung, einen Gleitschutz bei pneumatischen Bremsen für Schienenfahrzeuge zu entwickeln, welcher wesentlich einfacher aufgebaut und einzustellen ist, als der aus dem Stand der Technik bekannte Gleitschutz, wodurch Kosten und Zeit bei der Einstellung reduziert werden können. Die erzielten Bremswege sollen dabei mindestens so gering sein wie die mit "konventionellen" Systemen erzielten Bremswege. Zumindest sind die durch Vorschriften vorgegebenen Werte für die Bremswege einzuhalten.

Diese Aufgabe wird mit einem Verfahren gemäß Anspruch 1 gelöst.

Auf diese Weise kann wesentlich einfacher als aus dem Stand der Technik bekannt der Bremszylinderdruck für einen Bremsvorgang verändert werden, und es sind keine weiteren oder nur geringe zusätzliche Einstellungen an dem Regelungssystem notwendig. Insbesondere wird durch den letztgenannten Verfahrensschritt der Anpassung des Übertragungsfaktors des Schlupfreglers in Abhängigkeit mindestens eines fahrzeugspezifischen Parameters (des Bremszustandsfaktors) eine einfache Adaption der erfindungsgemäßen Regelung des Bremszylinderdruckes an unterschiedliche Fahrzeugtypen und Fahrzeugarten ermöglicht.

Prinzipiell funktioniert das erfindungsgemäße Verfahren gut, wenn ein fest eingestellter Wert für den Soll-Schlupf vorgegeben wird. Wesentlich verbessert kann das Verfahren aber noch werden, wenn der Wert für den Soll-Schlupf variabel vorgebbar ist und so eine ständige Adaptierung des Soll-Schlupfes an die aktuellen Gegebenheiten möglich ist. Optimal funktioniert das Verfahren, wenn der Soll-Schlupf im Rahmen einer Optimal-Schlupf-Suche ermittelt wird.

Der Soll-Schlupf kann im Bereich des Mikroschlupfes gewählt aber auch im Bereich des Makroschlupfes gewählt werden, wie dies später noch eingehender erörtert wird.

Zweckmäßig ist es, wenn der Ist-Schlupf permanent während des gesamten Bremsvorganges gemessen wird. In der Regel ist aber für die Schlupfregelung eine permanente Messung des Ist-Schlupfes während des gesamten Bremsvorgangs notwendig.

Erfindungsgemäß wird bei einem stabilen Bremsvorgang auf im Wesentlichen ebener und gerader Schiene fortlaufend die Achsgeschwindigkeit $\omega$ und der Bremszylinderdruck $P_C$ eines Radsatzes mit dem Rollradius $R$ gemessen und daraus der fahrzeugspezifische Parameter, genannt Bremszustandsfaktor $\zeta$, entsprechend dem folgenden Zusammenhang:

$$\xi = -\frac{R\,\dot{\omega}_i}{p_{C,i}}$$

ermittelt.

Um eine optimale Anpassung zu erreichen, ist es erfindungsgemäß vorgesehen, ausschließlich die Messwerte eines stabilen Bremsvorgangs zu verwenden. Ein stabiler Test-Bremsvorgang genügt, um den Bremszustandsfaktor zu bestimmen. Dies bedeutet einen wesentlichen Vorteil gegenüber der Anpassung wissensbasierter Regler, bei der viele verschiedene Einträge einer großen Tabelle durch eine Vielzahl von Versuchsfahrten neu bestimmt werden müssen.

Weiters ist es günstig, wenn bei Messung der Achsgeschwindigkeiten an q Achsen und die der Bremszylinderdrücke an $l$ Achsen erfolgt, womit der folgende Zusammenhang zur Ermittlung des Bremszustandsfaktors ($\xi$) genutzt werden kann:

$$\xi = -R\,\frac{\dfrac{1}{q}\sum_{i=1}^{q}\dot{\omega}_i}{\dfrac{1}{l}\sum_{i=1}^{l}p_{C,i}}\quad.$$

Auf diese Weise können Verfälschungen der Umrechnung von der Radrotation auf die Fahrgeschwindigkeit minimiert werden, indem in der implementierten Identifikationsgleichung der Mittelwert über alle Achsen des Schienenfahrzeugs verwendet wird.

Bei einer konkreten Ausführungsform werden zu m unterschiedlichen Zeitpunkten Messwerte aufgenommen, die zu den Zeitpunkten gehörenden Bremszustandsfaktoren $\xi(k)$ ermittelt, und es wird eine Mittelwertbildung der Bremszustandsfaktoren $\xi(k)$ durchgeführt:

$$\overline{\xi} = \frac{1}{m}\sum_{k=1}^{m}\xi(k)\quad.$$

An sich erfolgt also erfindungsgemäß die Anpassung des Übertragungsfaktors ($K_{R,i}$) eines Schlupfreglers (SRE) von einem Referenzfahrzeug auf ein anderes Fahrzeug unter Verwendung des Bremszustandsfaktors entsprechend dem Zusammenhang

$$K_{R,i} = K'_{R,i}\,\frac{\xi'}{\xi}\,,$$

wobei $K'_{R,i}$ der bekannte Reglerübertragungsfaktor eines Referenzfahrzeugs ist und $\xi'$ der Bremszustandsfaktor des Referenzfahrzeugs ist.

Eine Verfeinerung der Anpassung des Bremszustandsfaktors kann noch erreicht werden, wenn bei Vorhandensein eines aktuellen Messwertes für die Gesamtfahrzeugmasse folgender Zusammenhang verwendet wird:

$$K_{R,i} = K'_{R,i} \frac{\xi'}{\xi} \frac{M}{M_0} \qquad ,$$

wobei M die aktuelle Schienenfahrzeugmasse ist und $M_0$ die Masse ist, die das Schienenfahrzeug Während der Ermittlung des Bremszustandsfaktors $\xi$ aufweist.

Im Folgenden wird die Erfindung an Hand der Zeichnung näher erläutert. In dieser zeigt

Fig.1 eine schematische Darstellung eines erfindungsgemäßen Regelungssystems,

Fig. 2 den schematischen Verlauf der Geschwindigkeit eines Schienenfahrzeugs und anderer relevanter Größen während eines Bremsvorganges,

Fig.3 eine schematische Darstellung der Kraft und Drehmomentverhältnisse bei einem n-tel Fahrzeugmodell,

Fig. 4 den nichtlinearen Verlauf einer typischen, schematischen Kraftschlußbeanspruchung-Schlupfkurve beim Bremsbeginn und während der Bremsung, hervorgerufen durch Konditionierungseffekte,

Fig. 5a und 5b Wirkungspläne zur Erläuterung der Regelstreckenstruktur,

Fig. 6a und 6b Wirkungspläne zur Erläuterung der Anpassung des Reglerübertragungsfaktors mittels des Bremszustandsfaktors,

Fig. 7 Messwerte der Radgeschwindigkeiten und Bremszylinderdrücke eines realen Schienenfahrzeugs und die daraus berechneten Bremszustandsfaktoren, und

Fig.8 ein Ausführungsbeispiel der Realisierung des Verfahren zur Anpassung des Übertragungsfaktors eines Gleitschutzreglers.

Für die weiteren Erörterungen werden die folgenden Bezeichnungen verwendet

$A_K$     Bremszylinderkolbenfläche

$f_x$     Kraftschlussbeanspruchung

$g$     Erdbeschleunigung

$I_\omega$     Trägheitsmoment des Radsatzes

$k$     Zählgröße für Messzeitpunkte

$K_R$     Reglerübertragungsfaktor

$l$     Anzahl Radsätze mit Bremszylinderdruckmessung

$m$     Anzahl Messzeitpunkte

$M$     Gesamtmasse des Schienenfahrzeugs

$M_0$     Gesamtmasse des Schienenfahrzeugs zum Zeitpunkt des Bremsvorgangs

$n$     Anzahl Radsätze

$n_z$     Anzahl Bremszylinder pro Achse

$p_c$     Bremszylinderdruck

$q$     Anzahl Radsätze mit Achsgeschwindigkeitsmessung

| $r_m$ | Mittlerer Reibradius |
|---|---|
| R | Radradius |
| s | Schlupf |
| $T_B$ | Bremsmoment |
| u | Eingangsgröße des Systems "Rad-Schiene-Dynamik" |
| $ü_G$ | Gesamtgestängeübersetzung |
| $v$ | Fahrzeuggeschwindigkeit |
| $v_G$ | Gleitgeschwindigkeit |
| y | Stellgröße des Reglers |
| $\eta_G$ | Gestängewirkungsgrad |
| $\lambda$ | Rotationsfaktor |
| $\mu$ | Maximale Kraftschlussbeanspruchung |
| $\mu_B$ | Mittlerer Bremsbelagreibwert |
| $\xi$ | Bremszustandsfaktor |
| $\pi$ | Zusammenhang zwischen Reglerstellgröße und Bremszylinderdruck |
| $\rho$ | Regelalgorithmus ohne Reglerübertragungsfaktor |
| $\omega$ | Achsgeschwindigkeit |

Indizes wie "i" bezeichnen die Zählgröße für die Radsätze bzw. steht "soll" für die Führungsgröße. Das hochgestellte Zeichen" ' " bezeichnet den Referenzregler.

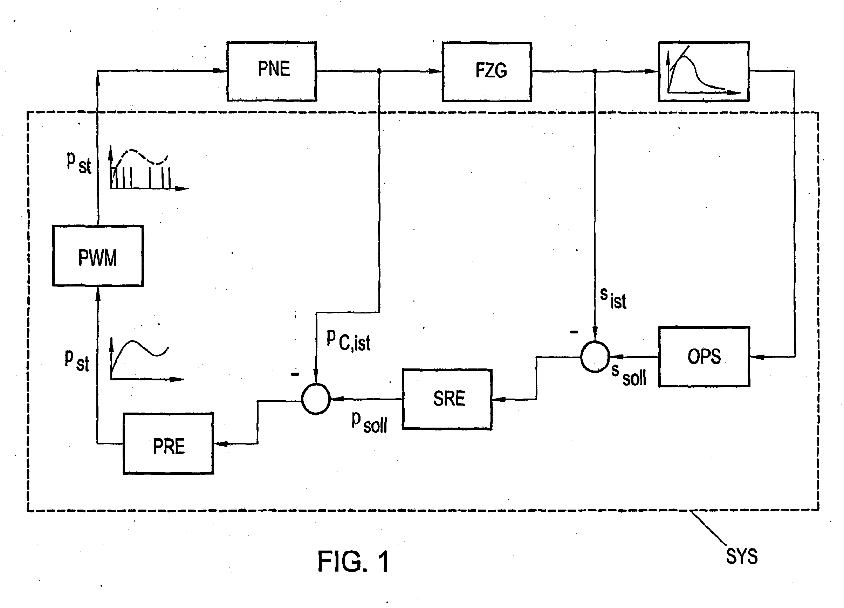

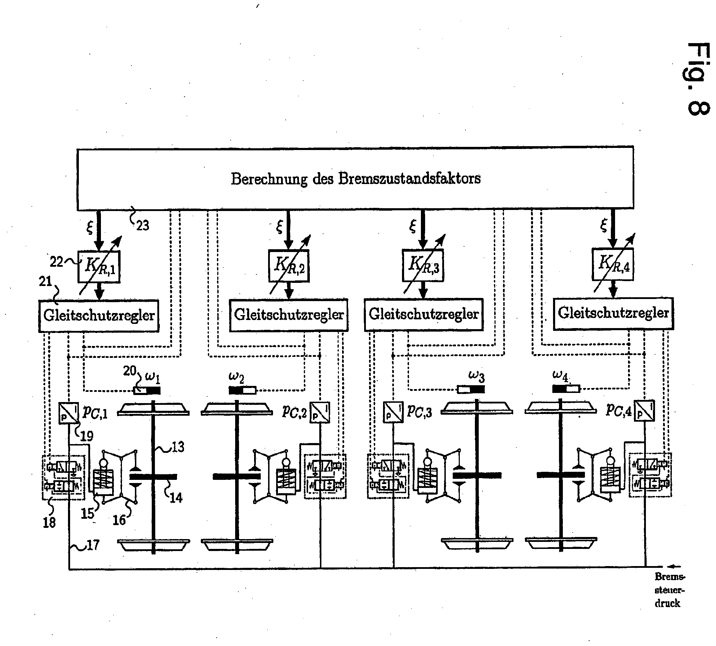

Figur 1 zeigt schematisch ein erfindungsgemäßes Regelungssystem SYS zur erfindungsgemäßen Regelung des Bremszylinderdruckes $p_{C,ist}$ einer pneumatischen Bremse PNE (siehe auch Fig. 8 mit den Bremszylinderdrücken $p_{C,1}$, $p_{C,2}$, $p_{C,3}$, $p_{C,4}$).

Während eines Bremsvorganges wird an dem Schienenfahrzeug FZG der momentane Ist-Schlupf $s_{ist}$ zwischen zumindest einem Rad 2 des Schienenfahrzeuges und einer Schiene 3 ermittelt (siehe auch Figur 3) und liegt als zeitkontinuierliches Signal vor. Weiters wird ein Soll-Schlupf $s_{soll}$ zwischen dem Rad 2 und der Schiene 3 vorgegeben.

Entsprechend der Abweichung des Ist-Schlupfes $s_{ist}$ von dem vorgegebenen Soll-Schlupf $s_{soll}$ wird der Bremszylinderdruck $p_{C,ist}$ und damit das Bremsmoment derart variiert, dass die Abweichung zwischen Soll- und Ist-Schlupf gegen Null geht, bzw. unter Berücksichtigung der Störungen des realen Systems minimiert wird.

Den Kern des erfindungsgemäßen Regelsystems SYS stellt ein kontinuierlicher Kaskadenregler dar. Zentral ist die oben beschriebene Schlupfregelung SRE, die nach einem PIDT Verfahren (linearer Regler) arbeitet und entsprechend dem vorgegebenen Soll-Schlupf $s_{soll}$ und dem aktuellen Ist-Schlupf $s_{ist}$ einen Bremszylindersolldruck $p_{soll}$ ermittelt. Im unterlagerten Druckregler PRE des Regelsystems SYS wird aus der Differenz dieses Bremszylindersolldrucks $p_{soll}$ und dem gemessenen Zylinderdruck $p_{C,ist}$ das Bremssteuerdrucksignal $p_{st}$ ermittelt, welches beispielsweise der notwendigen Zylinderdruckänderung entspricht. Falls notwendig wandelt ein nachgeschaltetes Schaltfolgengenerator-Modul PWM das kontinuierliche Drucksteuersignal $p_{st}$ in ein pulswellenmoduliertes diskretes Signal zur Ansteuerung der Gleitschutzventile um. Das gepulste Signal kann nur die Werte '0' oder '1' annehmen, welches von den pneumatischen Ventilen als 'Öffnen' oder 'Schließen' interpretiert wird.

Der Soll-Schlupf $s_{soll}$ kann fix vorgegeben werden - vorzugsweise werden aber während des Bremsvorganges unterschiedliche Werte für den Sollschlupf $s_{soll}$ eingestellt. Insbesondere günstig ist es, wenn der Soll-Schlupf $s_{soll}$ durch einen entsprechenden *Optimal-Schlupfsucher* OPS ermittelt wird, der dem eigentlichen Schlupfregler überlagert ist und ebenfalls die Drehgeschwindigkeit $\omega_i$ des Radsatzes i als Eingang besitzt, siehe Fig.1. Eine Vorgangsweise zur Ermittelung des optimalen Schlupfes ist beispielsweise bekannt aus: U. Kiencke, Realtime Estimation of Adhesion Characteristic between Tyres and Road, Proceedings of the IFAC World Congress, vol.1, pp.15-18, Sydney, July 1993.

Das erfindungsgemäße Regelungssystem SYS besteht somit im Wesentlichen aus einem kontinuierlichen Kaskadenregler mit dem zentralen linearen Schlupfregler SRE, einem wahlweise zuschaltbaren Druckregelkreis PRE sowie einer überlagerten Sollwertvorgabe und einem optional überlagerten Optimalschlupfsucher OPS (Optimalschlupf ist jener Schlupf, bei dem die bestmögliche Kraftschlussausnutzung erfolgt) und einem nachgeschaltetem Schaltfolgengenerator. Eingangsgrößen dieses Regelsystems SYS ist die aktuelle Drehzahl der Achse $\omega$ und die Fahrzeuggeschwindigkeit $v$ zur Ermittlung des Schlupfes $s_{ist}$. Ausgangsgröße ist das Bremssteuerdrucksignal $p_{st}$. Im allgemeinen wird das Bremssteuerdrucksignal $p_{st}$ als gepulstes Muster generiert, bedingt durch bereits vorliegende pneumatische Ventile.

Wie auch Figur 8 zu entnehmen, ist üblicherweise für die Bremse(n) jede Achse eines Schienenfahrzeuges ein solches Regelungssystem vorgesehen. Prinzipiell wäre es aber auch denkbar, dass ein Regelungssystem für mehrere Achsen bzw. die Bremse(n) von mehreren Achsen vorgesehen ist.

Durch die unterlagerte Druckregelung kann der Bremszylinderdruck genauer an dem Solldruck gehalten werden, was die Anzahl an Rad-Entbremsungen minimiert und damit zu einem geringem Luftverbrauch und zu kurzen Bremswegen führt - jedoch werden pneumatische Ventile mit Zylinderdruck-Sensoren benötigt.

Figur 2 zeigt beispielhaft einen Bremsvorgang eines Schienenfahrzeuges unter Verwendung eines erfindungsgemäßen Schlupfreglers SRE bzw. Regelungssystems SYS. Dargestellt sind die Geschwindigkeit v der Fahrzeuges, die Umfanggeschwindigkeit $\omega R$ des Rades und der Bremsweg BWE. Wie gut zu erkennen ist, nimmt anfangs die Umfanggeschwindigkeit $\omega R$ des Rades stärker als die Fahrzeuggeschwindigkeit v ab. Um zu verhindern, dass das Rad auf eine Geschwindigkeit von Null abgebremst wird (unerwünschtes Gleiten), wird entsprechend der Bremsdruck verringert, sodass die Umfanggeschwindigkeit des Rades wieder zunehmen kann. Anschließend kann der Bremsdruck wieder erhöht werden etc.

Wie gut zu erkennen ist, ist es insbesondere bei niedrigen Geschwindigkeiten, also nahe dem Fahrzeugstillstand, besonders wichtig, dass eine sehr exakte Regelung des Bremsdruckes stattfindet, um ein Gleiten der Räder zu verhindern. Dementsprechend wird in diesem Bereich die Umfanggeschwindigkeit der Räder nahe der Fahrzeuggeschwindigkeit gehalten.

Fig. 4 zeigt den nichtlinearen Verlauf der Kraftschlussbeanspruchung-Schlupf-Kurve. Die Reibungskraft ist das Produkt aus der vom Schlupf nichtlinear abhängigen Kraftschlussbeanspruchung $f_x$ wie in Figur 4 dargestellt und der Radaufstandskraft. Mit zunehmendem Schlupf s steigt die Kraftschlussbeanspruchung $f_x$ schnell an und fällt nach Erreichen ihres Maximums langsam ab. Der Maximalwert $\mu$ der Kraftschlussbeanspruchung ist bei trockener Schiene am größten und verringert sich deutlich, wenn schlechte Witterungsbedingungen vorherrschen. Findet der Bremsvorgang auf dem ansteigenden Ast einer $f_x$- Schlupfkurve statt, so ist er stabil. Beim Überschreiten des Maximums durch einen zu hohen Schlupfwert wird die Regelstrecke instabil - das Rad verzögert sehr schnell und steht still.

Findet der Bremsvorgang links vom Maximum statt ("Mikroschlupf", $s < s_{max}$), so bleibt das Rad stabil. Bei Bremsvorgängen rechts vom Maximum ("Makroschlupf", $s > s_{max}$) wird das Rad grundsätzlich instabil, d.h. es verzögert sehr schnell und steht schließlich still während gleichzeitig die träge Masse des Schienenfahrzeugs sich mit einer Geschwindigkeit größer Null weiter bewegt. Eine Flachstellenbildung ist die Folge.

Während eines Bremsvorgangs tritt durch die Relativgeschwindigkeit $\Delta v$ und die dadurch verursachten Reibkräfte bzw. Wärme eine Veränderung des Materialverhaltens auf. Weiterhin putzen die vorlaufenden Räder die Schiene für die nachlaufenden Achsen. Dieses Verhalten wird als Konditionierungseffekt bezeichnet und bewirkt, dass sich die Kraftschlusskurve in ihrem Niveau während eines Bremsvorgangs anhebt, wie in Fig.4 dargestellt (durchgezogene Linie zu einem Zeitpunkt $t_1$ "vor" dem Auftreten und strichlierte Linie für $f_x$ zu einem Zeitpunkt $t_2$ "nach" dem Auftreten von Konditionierungseffekten).

Das erfindungsgemäße Regelungssystems SYS arbeitet im Makro- und im Mikroschlupfbereich stabil ohne dass der Bremsvorgang instabil wird und das Rad still steht.

Der Betrieb im Mikroschlupfbereich bietet zwar einige Vorteile, wie einen sehr Verschleiß schonenden, mit hohem Komfort (wenig Ventilaktivitäten) verbundenen Bremsvorgang. Durch die steil ansteigende Kurve in diesem Bereich sind allerdings äußerst exakte Messungen der Eingangsgrößen notwendig.

Eine solch exakte Messung der Eingangsgrößen ist für die Regelung im Makroschlupf, insbesondere im flachen Teil der Kennlinien nicht notwendig. Außerdem werden durch die hohen Schlupfwerte die oben genannten Konditionierungseffekte aktiviert, die während einer Bremsung die Werte für die Kraftschlußbeanspruchung $f_x$ signifikant erhöhen. Somit sind wesentlich höhere Bremskräfte übertragbar und damit die Bremswege verkürzt.

Im Vergleich zu einem konventionellen Gleitschutzsystem konnte bei Fahrversuchen mit der erfindungsgemäßen Regelung im Makroschlupfbereich ein geringerer Luftverbrauch der pneumatischen Bremse festgestellt und eine deutlich bessere Bremsleistung erreicht werden.

Im Folgenden soll noch näher auf die der Erfindung zu Grunde liegenden Grundprinzipien eingegangen werden, und es sollen noch weitere vorteilhafte Aspekte der Erfindung näher untersucht werden.

Wie bereits erwähnt, wird an Stelle eines Kennfeldreglers, wie aus dem Stand der Technik bekannt, vorteilhafterweise ein konventioneller Regler SRE mit dem Schlupf s oder der Relativgeschwindigkeit $\Delta v$ (Differenz der Absolutgeschwindigkeiten von Fahrzeug und Rad) als Regelgröße eingesetzt

Die Aufgabe, den Einstellaufwand bei verschiedenen Fahrzeugtypen klein zu halten wird durch zwei Strategien erreicht Zum einen werden durch einen *robusten Reglerentwurf* die Zeitkonstanten der Regeleinrichtung und der Signalfilterung derart bestimmt, dass der Gleitschutz für eine breite Palette an Fahrzeugtypen von einer Lokomotive bis hin zur Metro stabil arbeitet. Einige wenige Parameter, wie die Fahrzeugmasse, die Zeitkonstante der Pneumatik und der Übertragungsfaktor $K_R'$ des Reglers sind *adaptiv,* d.h. fahrzeugspezifische Parameter des Regelalgorithmus. Diese Parameter werden während der Inbetriebnahme oder aus Messgrößen gezielter Test-Bremsmanöver bestimmt.

Das Test-Bremsmanöver wird mit dem Schienenfahrzeug auf einem ebenen und geraden Gleisabschnitt durchgeführt, wobei während des Bremsvorgangs keine der Achsen auf Grund der vorherrschenden Witterungsverhältnisse instabil werden darf. Für die Dauer des Bremsvorganges werden die Achsverzögerungen $\omega_i$ sowie die Bremszylinderdrücke (C-Drücke) $p_{C,i}$ kontinuierlich gemessen. Aus den Messwerten lässt sich der statische Übertragungsfaktor $\xi$ zwischen Bremszylinderdruck und Fahrzeugverzögerung bei bekanntem Radradius $R$ ermitteln. Der Übertragungsfaktor $\xi$, der im Folgenden Bremszustandsfaktor genannt wird, setzt sich aus sämtlichen relevanten Parametern des Bremssystems und des Fahrzeugs zusammen. Existiert für ein Schienenfahrzeug mit dem Bremszustandsfaktor $\xi'$ ein konventioneller Regler mit dem Übertragungsfaktor $K_R'$, so lässt sich für ein anderes Schienenfahrzeug mit dem Bremszustandsfaktor $\xi$ der Übertragungsfaktor desselben Reglers durch die Beziehung

$$K_R = K_R' \frac{\xi'}{\xi} \qquad (1)$$

anpassen.

Mit einem weiteres im Rahmen dieser Erfindung wie folgt beschriebenen Verfahren zur Anpassung des Übertragungsfaktors eines Gleitschutzreglers ist die Anpassung des Reglerübertragungsfaktors sehr einfach durchzuführen, denn ein stabiler Bremsvorgang genügt, um den Bremszustandsfaktor zu bestimmen. Dies bedeutet einen wesentlichen Vorteil gegenüber der Anpassung wissensbasierter Regler, bei der viele verschiedene Einträge einer großen Tabelle durch eine Vielzahl von Versuchsfahrten neu bestimmt werden müssen.

Figur 3 zeigt die Kraft- und Drehmomentverhältnisse bei einem *n*-teil Fahrzeugmodell. Der *n*-te Teil des Schienenfahrzeugkörpers 1 ist mit dem gebremsten Rad 2 der Achse *i* verbunden, das sich auf der Schiene 3 bewegt. Wendet man den Impuls- und Drallsatz auf das gezeigte Modell an, so erhält man die Gleichungen (2) und (3).

Aufstellen der Bewegungsgleichungen für das *n*-tel-Fahrzeugmodell eines Fahrzeugs mit *n* Achsen liefert:

$$\dot{v} = \frac{n}{M}\left[ -\left( \frac{1}{n}\sum_{i=1}^{n} f_{x,i}(s_i) \right)\frac{M}{n}g \right] = -g\frac{1}{n}\sum_{i=1}^{n} f_{x,i}(s_i) \qquad (2)$$

$$\dot{\omega}_i = \frac{1}{I_\omega}\left[ Rf_{x,i}(s_i)\frac{M}{n}g - T_{B,i} \right] \qquad i = 1,\ldots,n \qquad (3)$$

Die Fahrzeuggeschwindigkeit $v$ und die Achsgeschwindigkeit der *i*-ten Achse $\omega_i$ sind über die nichtlineare Schlupfbeziehung miteinander gekoppelt:

$$s_i = \frac{\frac{v}{R} - \omega_i}{\frac{v}{R}} \qquad . \qquad (4)$$

Ableiten der Gleichung (4) nach der Zeit ergibt

7

$$\dot{s}_i = \frac{1}{v}\left[\dot{v}(1-s_i) - R\,\dot{\omega}_i\right]\quad. \tag{5}$$

Einsetzen der Gleichungen (2) und (3) in (5) liefert

$$\dot{s}_i = \frac{1}{v}\left[g\left((s_i-1)\left(\frac{1}{n}\sum_{i=1}^{n}f_{x,i}(s_i)\right) - \frac{R^2 M}{I_\omega n}f_{x,i}(s_i)\right) + \frac{R}{I_\omega}\dot{T}_{B,i}\right]\quad. \tag{6}$$

Damit ist eine nichtlineare Differentialgleichung für das dynamische Verhalten des Schlupfes gefunden. Mit dem in der Schienenfahrzeugtechnik üblichen Rotationsfaktor $\lambda$, für den beim $n$-tel-Fahrzeugmodell

$$\lambda = 1 + \frac{I_\omega n}{MR^2} \tag{7}$$

gilt, wird aus Gleichung (6)

$$\dot{s}_i = \frac{1}{v}\left[g\left((s_i-1)\left(\frac{1}{n}\sum_{i=1}^{n}f_{x,i}(s_i)\right) - \frac{1}{\lambda-1}f_{x,i}(s_i)\right) + \frac{\lambda}{\lambda-1}u_i\right]\quad. \tag{8}$$

Die in Gleichung (8) neu eingeführte Größe $u_i$ ist die Eingangsgröße eines durch die Gleichungen (2) und (8) beschriebenen Systems, das die Rad-Schiene-Dynamik repräsentiert. Aus dem Vergleich von Gleichung (8) mit (6) erhält man

$$u_i = \frac{n}{\lambda MR}T_{B,i}\quad. \tag{9}$$

Bei einem pneumatischen Bremssystem ergibt sich das Bremsmoment der i-ten Achse bezüglich des Arbeitspunktes typischerweise zu

$$T_{B,i} = r_m\,\mu_B\,\eta_G\,\ddot{u}_G\,n_Z\,A_K\,p_{C,i}\quad. \tag{10}$$

Einsetzen von Gleichung (10) in Gleichung (9) liefert einen Zusammenhang zwischen $u_i$ und dem Bremszylinderdruck $p_{C,i}$

$$u_i = \frac{n}{\lambda MR}r_m\,\mu_B\,\eta_G\,\ddot{u}_G\,n_Z\,A_K\,p_{C,i}\quad. \tag{11}$$

Die in Gleichung (11) auftretenden fahrzeugspezifischen Parameter werden zu dem sogenannten Bremszustandsfaktor $\xi$ zusammen gefasst:

$$\xi = \frac{n}{\lambda MR} r_m \, \mu_B \, \eta_G \, \ddot{u}_G \, n_Z \, A_K \quad . \tag{12}$$

Weiter unten wird gezeigt, dass sich der Bremszustandsfaktor $\xi$ aus Messwerten der Radgeschwindigkeiten und Bremszylinderdrücke währen eines Bremsvorgangs ermitteln lässt.

Das System soll mittels eines Schlupfreglers geregelt werden. Da die Stellgröße $y_i$ des Reglers Einfluss auf das Bremssystem des Schienenfahrzeugs übt, ist der Bremszylinderdruck $p_{C,i}$ eine Funktion $\pi_i(y_i)$ der Reglerstellgröße $y_i$:

$$p_{C,i} = 1 \cdot \pi_i(y_i) \quad . \tag{13}$$

Es wird angenommen, dass das Bremssystem mit der Gleitschutzeinrichtung einen Übertragungsfaktor von 1 zwischen der Stellgröße $y_i$ und dem Bremszylinderdruck $p_{C,i}$ aufweist.

Für einen ausgewählten Bremszustandsfaktor $\xi'$, d.h. für einen bestimmten Schienenfahrzeugtyp oder allgemeines $\xi' = 1\dfrac{\mathrm{m}}{\mathrm{s^2\,Pa}}$, ist ein Referenzregler zu entwerfen, vorzugsweise mit Methoden des robusten Reglerdesigns, um beispielsweise Robustheit der Regelung gegenüber sich ändernden Kraftschlussverhältnissen im Rad-Schiene-Kontakt und gegenüber Änderungen im zeitlichen Verhaltens des Druckaufbaus in den Bremszylindern zu erreichen. Der so gewonnene Regelalgorithmus wird bezüglich seines Arbeitspunktes die Form

$$y_i = K'_{R,i} \cdot \rho_i(s_{soll,i} - s_i) \qquad \text{für} \quad \xi' \tag{14}$$

besitzen. Darin bedeuten $K'_{R,i}$ der Übertragungsfaktor des Reglers der $i$-ten Achse und $\rho_i$ eine hinsichtlich des Regelungsziels geeignet gewählte Funktion, die von der Regelabweichung $s_{soll,i} - s_i$ abhängig ist.

Die Anpassung des Reglerübertragungsfaktors für eine andere Schienenfahrzeugserie mit einem von $\xi'$ verschiedenen Bremszustandsfaktor $\xi$ aber mit gleichen oder höheren Eigenfrequenzen der Fahrzeugdynamik erfolgt gemäß Gleichung (1) durch Multiplikation des Reglerübertragungsfaktors $K'_{R,i}$ mit dem Quotienten der Bremszustandsfaktoren $\frac{\xi'}{\xi}$. Der angepasste Regelalgorithmus lautet somit

$$y_i = K_{R,i} \cdot \rho_i(s_{soll,i} - s_i) \qquad \text{mit} \quad K_{R,i} = K'_{R,i} \frac{\xi'}{\xi} \quad . \tag{15}$$

Wird anstelle einer Schlupfregelung eine Gleitgeschwindigkeitsregelung betrachtet, so gilt für die Anpassung des Reglerübertragungsfaktors derselbe Zusammenhang. Die Gleitgeschwindigkeit ist definiert als

$$v_{G,i} = v - R\omega_i \quad . \tag{16}$$

Wird diese Beziehung anstelle von Gleichung (4) verwendet, so ergibt sich für die Dynamik der Gleitgeschwindigkeit

$$\dot{v}_{G,i} = -g\left(\frac{1}{n}\sum_{i=1}^{n} f_{x,i}(v_{G,i}) + \frac{1}{\lambda-1} f_{x,i}(v_{G,i})\right) + \frac{\lambda}{\lambda-1} u_i \qquad (17)$$

und der als Referenz zu nutzende Regelungsalgorithmus besitzt bezüglich seines Arbeitspunktes die Form

$$y_i = K'_{R,i} \cdot \rho_i(v_{G,soll,i} - v_{G,i}) \qquad \text{für} \quad \xi'' \quad . \qquad (18)$$

Der an die Fahrzeugserie angepasste Regelalgorithmus lautet entsprechend

$$y_i = K_{R,i} \cdot \rho_i(v_{G,soll,i} - v_{G,i}) \qquad \text{mit} \quad K_{R,i} = K'_{R,i} \frac{\xi''}{\xi} \quad . \qquad (19)$$

Im Folgenden wird dargelegt, wie der Bremszustandsfaktor $\xi$ durch einen Bremsvorgang ermittelt werden kann. Es muss sichergestellt werden, dass der Bremsvorgang auf einem möglichst ebenen und geraden Gleis stattfindet und dass während der Bremsung keine der $n$ Achsen instabil wird. Sind diese Forderungen erfüllt, wird im Weiteren angenommen, dass an allen $n$ Achsen ungefähr derselbe Kraftschluss $f_x$ vorliegt und ungefähr dasselbe Bremsmoment $T_{B,i}$ angelegt ist (gleiche oder sehr ähnliche pneumatische Bremsausrüstung an allen $n$ Achsen). Die Bewegungsgleichungen (2) und (3) des $n$-tel Fahrzeugmodells vereinfachen sich zu

$$\dot{v} = -g f_x \qquad (20)$$

$$\dot{\omega}_i = \frac{1}{I_\omega}\left[Rf_x \frac{M}{n} g - T_{B,i}\right], \quad i = 1, ..., n. \qquad (21)$$

Gleichung (20) lässt sich nach $f_x$ umstellen und man erhält mit der Approximation $v \approx R\,\omega_i$ bei langsamer Verzögerung bzw. geringem Schlupf:

$$f_x = -\frac{R\,\dot{\omega}_i}{g} \quad . \qquad (22)$$

Einsetzen der Gleichung (22) in Gleichung (21) ergibt

$$\left(1 + \frac{MR^2}{I_\omega n}\right)\dot{\omega}_i = -\frac{1}{I_\omega} T_{B,i} \quad . \qquad (23)$$

Unter Verwendung des Rotationsfaktors $\lambda$ aus Gleichung (7) wird aus Gleichung (23)

$$\dot{\omega}_i = -\frac{1}{R}\frac{n}{\lambda MR}T_{B,i} \qquad (24)$$

$$= -\frac{1}{R}\xi\, p_{C,i} \quad . \qquad (25)$$

Auflösen von Gleichung (25) nach dem Bremszustandsfaktor $\xi$ ergibt

$$\xi = -\frac{R\dot{\omega}_i}{p_{C,i}} \quad . \qquad (26)$$

Damit ist eine Rechenvorschrift zur Bestimmung des Bremszustandsfaktors $\xi$ gefunden. Werden Achsge-schwindigkeiten an $q$ Achsen gemessen und Bremszylinderdrücke an $l$ Achsen erfasst, dann sind die Messwerte vorzugsweise über die Achsen zu mitteln. Damit erhält man eine erweiterte Rechenvorschrift zur Bestimmung des Brems-zustandsfaktors $\xi$ :

$$\xi = -R\frac{\dfrac{1}{q}\displaystyle\sum_{i=1}^{q}\dot{\omega}_i}{\dfrac{1}{l}\displaystyle\sum_{i=1}^{l}p_{C,i}} \quad . \qquad (27)$$

Wird zu verschiedenen Zeitpunkten $k$ mit $k=1,..., m$ in der stationären Phase des Bremsvorgangs der Bremszustandsfaktor gemäß Gleichung (27) berechnet, empfiehlt sich schließlich eine Mittelung dieser Werte $\xi(k)$

$$\overline{\xi} = \frac{1}{m}\sum_{k=1}^{m}\xi(k) \quad . \qquad (28)$$

Gemäß Gleichung (12) setzt sich der Bremszustandsfaktor $\xi$ aus einer Vielzahl fahrzeugspezifischer Parameter zusammen. Diese Parameter können sich über die Betriebsdauer eines Schienenfahrzeugs hinweg ändern. Beispielsweise nutzen sich Bremsbeläge ab, etc. Es empfiehlt sich daher, die Anpassung des Reglerübertragungsfaktors entsprechend Gleichung (1) von Zeit zu Zeit für ein und dasselbe Schienenfahrzeug durchzuführen.
Bei einigen Schienenfahrzeugtypen wird die Masse des Fahrzeugs während des Betriebs bestimmt. Da der Bremszustandsfaktor $\xi$ gemäß Gleichung (12) von der Schienenfahrzeugmasse abhängt, kann die Information der augenblicklichen Masse genutzt werden, um die Anpassungsvorschrift (1) durch Einbeziehen der Masse zu verfeinern:

$$K_{R,i} = K'_{R,i}\frac{\xi'}{\xi}\frac{M}{M_0} \quad . \qquad (29)$$

Hierbei ist $M$ die augenblickliche Masse des Schienenfahrzeugs und $M_0$ ist die Masse, die das Schienenfahrzeug zum Zeitpunkt des Bremsvorgangs zur Bestimmung von $\xi$ besaß.

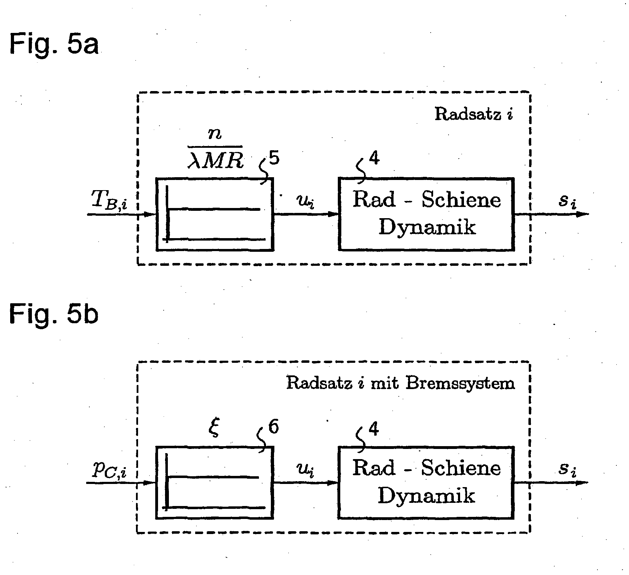

Figur 5a zeigt nun den Wirkungsplan der Regelstrecke "Radsatz $i$". Die Regelstrecke, dargestellt als Übertragungsglied zwischen dem Bremsmoment $T_{B,i}$ (Eingangsgröße) und dem Schlupf $s_i$ (Ausgangsgröße), lässt sich als Reihenschaltung eines Übertragungsgliedes "Rad-Schiene-Dynamik" 4 und eines Proportionalgliedes 5 auffassen. Das Übertragungsglied "Rad-Schiene-Dynamik" 4 beschreibt das Übertragungsverhalten zwischen der Eingangsgröße $u_i$ und dem Schlupf $s_i$ und wird beim n -tel Fahrzeugmodell durch die beiden Differenzialgleichungen (2) und (8) beschrieben. Das Proportionalglied 5 repräsentiert Gleichung (9).

Fig. 5b zeigt den Wirkungsplan der Regelstrecke "Radsatz $i$ mit Bremssystem". Die Eingangsgröße der Regelstrecke ist der Bremszylinderdruck $p_{C,i}$. Damit besitzt das dem Übertragungsglied "Rad-Schiene-Dynamik" 4 vorgeschaltete Proportionalglied den Übertragungsfaktor $\xi$ gemäß der Gleichungen (11) und (12). Der Übertragungsfaktor $\xi$ wird auch Bremszustandsfaktor genannt.

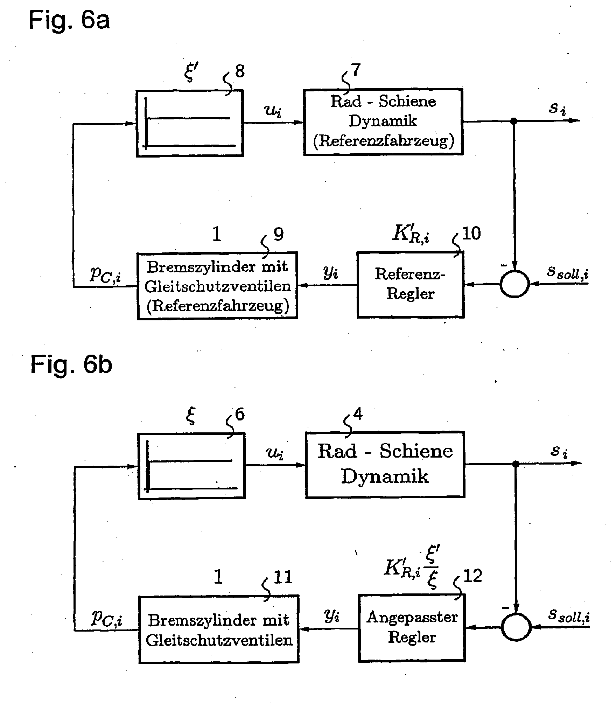

Fig. 6a zeigt die Regelstrecke "Radsatz $i$ mit Bremssystem" eines Referenzschienenfahrzeugs 7, nun eingebettet in einen geschlossenen Regelkreis zur Regelung des Schlupfes $s_i$ bezüglich der Führungsgröße $s_{soll,i}$. Für die Rad-Schiene-Dynamik 7 des Referenzschienenfahrzeug mit dem Bremszustandsfaktor $\xi'$ (Bezugszeichen 8) wurde ein Referenzregler 10 mit dem Übertragungsfaktor $K'_{R,i}$ ausgelegt. Der Zusammenhang zwischen der Stellgröße $y_i$ und dem Bremszylinderdruck $p_{C,i}$, wird durch den Übertragungsblock 9 (Bremszylinder mit Gleitschutzventilen des Referenzfahrzeuges) dargestellt.

Fig. 6b zeigt den Regelkreis mit der Regelstrecke "Radsatz $i$ mit Bremssystem" eines Schienenfahrzeugs mit dem Bremszustandsfaktor $\xi$ (Bezugszeichen 6), für das der Regler anzupassen ist. Der angepasste Regler 12 besitzt den Übertragungsfaktor gemäß Gleichung (15). Der Bremszylinder mit Gleitschutzventilen ist mit dem Bezugszeichen 11 versehen, 4 bezeichnet die Rad-Schiene-Dynamik des Fahrzeuges.

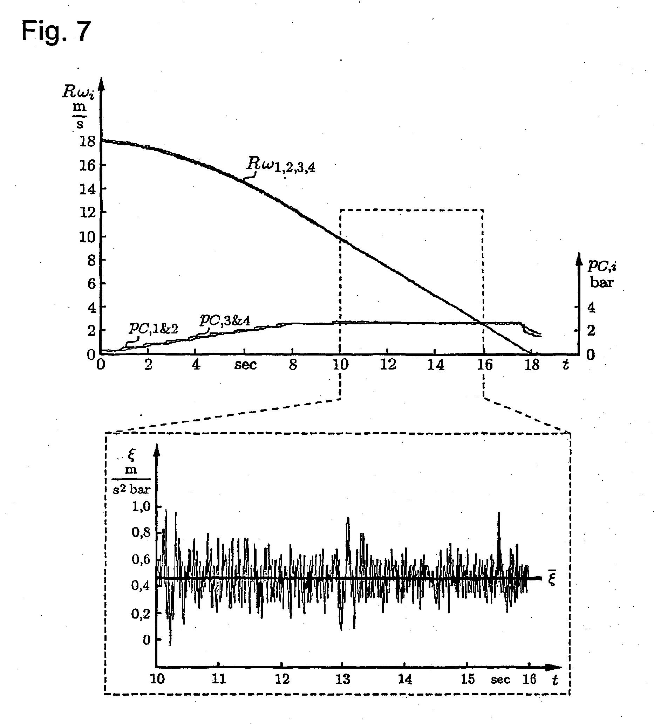

Fig. 7 zeigt ein Diagramm mit Messwerten der vier Radumfangsgeschwindigkeiten $R\omega_1$, $R\omega_2$, $R\omega_3$ und $R\omega_4$ sowie den beiden Bremszylinderdrücken pro Drehgestell $p_{C,1\&2}$ und $p_{C,3\&4}$. Die Werte wurden an einem realen Schienenfahrzeug gemessen. Der untere Plot zeigt den Wert des Bremszustandsfaktors $\xi$, berechnet aus den Messwerten im Zeitbereich des stationären Bremsvorgangs gemäß Gleichung (27) bzw. (28). Für den Mittelwert ergibt sich

$$\overline{\xi} = 0{,}46\,\frac{\mathrm{m}}{\mathrm{s^2\,bar}}\,.$$

Fig. 8 zeigt an Hand eines Ausführungsbeispiels, wie das erfindungsgemäße Verfahren bei einem vierachsigen Schienenfahrzeug angewendet werden kann. Der Bremszylinder 15 erzeugt eine Bremskraft, die über das Bremsgestänge mit Bremsbelägen 16 auf die Bremsscheibe 14 wirkt. Dadurch entsteht ein auf den Radsatz 13 wirkendes Bremsmoment. Der Bremszylinderdruck ergibt sich aus dem Bremssteuerdruck, der über die Bremsleitung 17 und den Gleitschutzventilen 18 an dem Bremszylinder 15 anliegt. Ein Drucksensor 19 stellt dem Gleitschutzregler 21 (entspricht dem Regelungssystem SYS aus Fig.1) Messwerte des Bremszylinderdrucks zur Verfügung. Außerdem erhält der Gleitschutzregler 21 Messwerte der Achsgeschwindigkeit durch den Impulsgeber 20. Der Gleitschutzregler 21 stellt die Gleitschutzventile 18. Bei dem Gleitschutzregler 21 handelt es sich um einen konventionellen Regler mit dem Übertragungsfaktor 22. Mittels der Einheit zur Berechnung des Bremszustandsfaktors 23 wird der Wert $\xi$ gemäß Gleichung (28) ermittelt und zum Update des Reglerübertragungsfaktors 22 bezüglich des gegebenen Schienenfahrzeugtypen genutzt. Die Einheit 23 zur Berechnung des Bremszustandsfaktors benötigt Messwerte der Achsgeschwindigkeiten und Bremszylinderdrücke aller vier Achsen, die während der stationären Phase eines stabilen Bremsvorgangs aufgenommen wurden.

**Patentansprüche**

1. Verfahren zur Adaptierung des Bremszylinderdruckes ($p_{C,ist}$; $p_{C1}$, $p_{C2}$, $p_{C3}$, $p_{C4}$) einer pneumatischen Bremse eines Schienenfahrzeuges (FZG),
wobei während eines Bremsvorganges

- der momentane Ist-Schlupf ($s_{ist}$) zwischen zumindest einem Rad (2) des Schienenfahrzeuges (FZG) und einer Schiene (3) ermittelt wird,
- weiters ein Soll-Schlupf ($s_{soll}$) zwischen dem zumindest einen Rad (2) und der Schiene (3) vorgegeben wird, und
- entsprechend der Abweichung des Ist-Schlupfes ($s_{ist}$) von dem vorgegebenen Soll-Schlupf ($s_{soll}$) mittels eines Schlupfreglers (SRE) ein Soll-Bremszylinderdruck ($p_{soll}$) ermittelt wird und
- der aktuelle Ist-Bremszylinderdruck ($p_{C,ist}$; $p_{C1}$, $p_{C2}$, $p_{C3}$, $p_{C4}$) gemessen und an den ermittelten Soll-Bremszylinderdruck ($p_{soll}$) derart adaptiert wird, dass die Abweichung zwischen Soll- und Ist-Schlupf gegen Null geht oder minimiert wird, und
- wobei zur Anpassung an das Schienenfahrzeug ein Update eines Übertragungsfaktors ($K_{R,i}$) des Schlupfreglers (SRE) erfolgt, wobei der Übertragungsfaktor ($K_{R,i}$) nach Ermittlung eines Bremszustandsfaktors ($\xi$) des Schienenfahrzeugs, die aus bei einem stabilen Bremsvorgang auf im Wesentlichen ebener und gerader Schiene fortlaufend gemessenen Messwerten der Achsgeschwindigkeit ($\omega_i$) und des Bremszylinderdrucks ($p_{C,i}$) eines Radsatzes ($i$) mit dem Rollradius (R) entsprechend dem folgenden Zusammenhang:

$$\xi = -\frac{R\,\dot{\omega}_i}{p_{C,i}}$$

erfolgt, anhand eines bekannten Reglerübertragungsfaktors ($K'_{R,i}$) eines Referenzfahrzeugs und eines bekannten oder errechneten Bremszustandsfaktors ($\xi'$) des Referenzfahrzeugs entsprechend dem Zusammenhang

$$K_{R,i} = K'_{R,i}\,\frac{\xi'}{\xi}$$

berechnet wird.

2. Verfahren nach Anspruch 1, **dadurch gekennzeichnet, dass** ein fest eingestellter Wert für den Soll-Schlupf ($s_{soll}$) vorgegeben wird.

3. Verfahren nach Anspruch 1, **dadurch gekennzeichnet, dass** der Wert für den Soll-Schlupf ($s_{soll}$) variabel vorgebbar ist.

4. Verfahren nach Anspruch 3, **dadurch gekennzeichnet, dass** der Soll-Schlupf ($s_{soll}$) im Rahmen einer Optimal-Schlupf-Suche ermittelt wird.

5. Verfahren nach einem der Ansprüche 1 bis 4, **dadurch gekennzeichnet, dass** der Soll-Schlupf ($s_{soll}$) im Bereich des Mikroschlupfes gewählt wird.

6. Verfahren nach einem der Ansprüche 1 bis 4, **dadurch gekennzeichnet, dass** der Soll-Schlupf ($s_{soll}$) im Bereich des Makroschlupfes gewählt wird.

7. Verfahren nach einem der Ansprüche 1 bis 6, **dadurch gekennzeichnet, dass** der Ist-Schlupf ($s_{ist}$) permanent während des gesamten Bremsvorganges gemessen wird.

8. Verfahren nach einem der Ansprüche 1 bis 7, wobei bei Messung von Achsgeschwindigkeiten an q Achsen und Bremszylinderdrücken an $l$ Achsen der folgende Zusammenhang zur Ermittlung des Bremszustandsfaktors ($\xi$) genutzt wird:

$$\xi = -R\,\frac{\dfrac{1}{q}\sum_{i=1}^{q}\dot{\omega}_i}{\dfrac{1}{l}\sum_{i=1}^{l}p_{C,i}}\quad.$$

9. Verfahren nach einem der Ansprüche 1 bis 8, **dadurch gekennzeichnet, dass** zu m unterschiedlichen Zeitpunkten Messwerte aufgenommen werden, die zu den Zeitpunkten gehörenden Bremszustandsfaktoren $\xi(k)$ ermittelt werden, und eine Mittelwertbildung der Bremszustandsfaktoren $\xi(k)$ durchgeführt wird:

$$\overline{\xi} = \frac{1}{m}\sum_{k=1}^{m}\xi(k)\quad.$$

10. Verfahren nach Anspruch 1, **dadurch gekennzeichnet, dass** bei Vorhandensein eines aktuellen Messwertes für die Gesamtfahrzeugmasse (M) folgender Zusammenhang verwendet wird:

$$K_{R,i} = K'_{R,i}\,\frac{\xi'}{\xi}\,\frac{M}{M_0} \qquad ,$$

wobei M die aktuelle Schienenfahrzeugmasse ist und $M_0$ die Masse ist, die das Schienenfahrzeug (FZG) während der Ermittlung des Bremszustandsfaktors $\xi$ aufweist.

**11.** Regelungssystem (SYS) umfassend

- einen Schlupfregler (SRE), mit dem zur Anpassung des aktuellen Schlupfes ($s_{ist}$) an einen vorgebbaren Soll-Schlupf ($s_{soll}$) ein Soll-Bremszylinderdruck ($p_{soll}$) ermittelt wird,
- einen Bremszylinderdruckregler (PRE), welcher dazu eingerichtet ist, den aktuellen Bremszylinderdruck ($pc_{ist}$) an den ermittelten Soll-Bremszylinderdruck ($p_{soll}$) anzupassen, sowie
- eine Einheit (23) zur Berechnung des Bremszustandsfaktors ($\xi$),
- wobei das Regelungssystem (SYS) dazu eingerichtet ist, zur Anpassung an das Schienenfahrzeug ein Update eines Übertragungsfaktors ($K_{R,i}$) des Schlupfreglers (SRE) durchzuführen, wobei der Übertragungsfaktor ($K_{R,i}$) nach Ermittlung des Bremszustandsfaktors ($\xi$) des Schienenfahrzeugs, die aus bei einem stabilen Bremsvorgang auf im Wesentlichen ebener und gerader Schiene fortlaufend gemessenen Messwerten der Achsgeschwindigkeit ($\omega_i$) und des Bremszylinderdrucks ($p_{C,i}$) eines Radsatzes ($i$) mit dem Rollradius (R) entsprechend dem folgenden Zusammenhang:

$$\xi = -\frac{R\,\dot{\omega}_i}{p_{C,i}}$$

erfolgt, anhand eines bekannten Reglerübertragungsfaktors ($K'_{R,i}$) eines Referenzfahrzeugs und eines bekannten oder errechneten Bremszustandsfaktors ($\xi'$) des Referenzfahrzeugs entsprechend dem Zusammenhang

$$K_{R,i} = K'_{R,i}\,\frac{\xi'}{\xi}$$

berechnet wird.

**12.** Regelungssystem (SYS) nach Anspruch 11, weiters umfassend eine Einheit (OPS) zur Ermittlung eines Optimalwertes für den Soll-Schlupf ($s_{soll}$).

**Claims**

**1.** Method for adapting the brake cylinder pressure ($p_{C,act}$; $p_{C1}$, $p_{C2}$, $p_{C3}$, $p_{C4}$) of a pneumatic brake of a rail vehicle (FZG), wherein during a braking process

- the instantaneous actual slip ($s_{act}$) between at least one wheel (2) of the rail vehicle (FZG) and a rail (3) is determined,
- furthermore a setpoint slip ($s_{setp}$) between the at least one wheel (2) and the rail (3) is predefined, and
- a setpoint brake cylinder pressure ($p_{setp}$) is determined by means of a slip controller (SRE) in accordance with the deviation of the actual slip ($s_{act}$) from the predefined setpoint slip ($s_{setp}$), and
- the instantaneous actual brake cylinder pressure ($p_{C,act}$; $p_{C1}$, $p_{C2}$, $p_{C3}$, $p_{C4}$) is measured and is adapted to the determined setpoint brake cylinder pressure ($p_{setp}$) in such a way that the deviation between the setpoint and actual slip tends towards zero or is minimized, and
- wherein, in order to carry out adaptation to the rail vehicle, an update of a transmission factor ($K_{R,i}$) of the slip controller (SRE) is implemented, wherein the transmission factor ($K_{R,i}$) is calculated after determination of a braking state factor ($\xi$) of the rail vehicle, which takes place on the basis of measured values of the axle speed ($\omega_i$) and of the brake cylinder pressure ($p_{C,i}$) of a wheel set ($i$) with the rolling radius (R), measured continuously during a stable braking process on an essentially level and straight rail, in accordance with the following relationship

$$\xi = -\frac{R\,\dot{\omega}_i}{p_{C,i}}$$

,

on the basis of a known controller transmission factor ($K'_{R,i}$) of a reference vehicle and of a known or calculated braking state factor ($\xi'$) of the reference vehicle in accordance with the relationship

$$K_{R,i} = K'_{R,i}\,\frac{\xi'}{\xi}\quad.$$

2. Method according to Claim 1, **characterized in that** a permanently set value is predefined for the setpoint slip ($S_{setp}$).

3. Method according to Claim 1, **characterized in that** the value for the setpoint slip ($s_{setp}$) can be predefined in a variable fashion.

4. Method according to Claim 3, **characterized in that** the setpoint slip ($s_{setp}$) is determined within the scope of an optimum slip search.

5. Method according to one of Claims 1 to 4, **characterized in that** the setpoint slip ($s_{setp}$) is selected in the region of the microslip.

6. Method according to one of Claims 1 to 4, **characterized in that** the setpoint slip ($s_{setp}$) is selected in the region of the macroslip.

7. Method according to one of Claims 1 to 6, **characterized in that** the actual slip ($s_{act}$) is measured continuously during the entire braking process.

8. Method according to one of Claims 1 to 7, wherein, when axle speeds are measured at q axles and brake cylinder presures at *1* axles, the following relationship is used to determine the brake state factor ($\xi$):

$$\xi = -R\,\frac{\dfrac{1}{q}\sum_{i=1}^{q}\dot{\omega}_i}{\dfrac{1}{l}\sum_{i=1}^{l}p_{C,i}}\quad.$$

9. Method according to one of Claims 1 to 8, **characterized in that** at m different times, measured values are recorded, the brake state factors $\xi(k)$ associated with the times are determined, and mean values are formed for the brake state factors $\xi(k)$ :

$$\overline{\xi} = \frac{1}{m}\sum_{k=1}^{m}\xi(k)\quad.$$

10. Method according to Claim 1, **characterized in that** the following relationship is used when a current measured value for the total vehicle mass (M) is present:

$$K_{R,i} = K'_{R,i}\,\frac{\xi'}{\xi}\,\frac{M}{M_0}\quad,$$

where M is the current rail vehicle mass and $M_0$ is the mass which the rail vehicle (FZG) has during the determination of the brake state factor $\xi$.

11. Control system (SYS) comprising

    - a slip controller (SRE) with which a setpoint brake cylinder pressure ($p_{setp}$) is determined in order to adapt the current slip ($s_{act}$) to a predefinable setpoint slip ($s_{setp}$),
    - a brake cylinder pressure controller (PRE), which is configured to adapt the current brake cylinder pressure ($pc_{act}$) to the determined setpoint brake cylinder pressure ($p_{setp}$), and,
    - a unit (23) for calculating the brake state factor ($\xi$),
    - wherein the control system (SYS) is configured to implement an update of a transmission factor ($K_{R,i}$) of the slip controller (SRE) in order to carry out adaptation to the rail vehicle, wherein the transmission factor ($K_{R,i}$) is calculated after determination of the brake state factor ($\xi$) of the rail vehicle, which takes place on the basis of measured values of the axle speed ($\omega_i$) and of the brake cylinder pressure ($p_{c,i}$) of a wheel set ($i$) with the rolling radius (R), measured continuously during a stable braking process on an essentially level and straight rail, in accordance with the following relationship

$$\xi = -\frac{R\dot{\omega}_i}{p_{C,i}} ,$$

on the basis of a known controller transmission factor ($K'_{R,i}$) of a reference vehicle and of a known or calculated brake state factor ($\xi'$) of the reference vehicle in accordance with the relationship

$$K_{R,i} = K'_{R,i} \frac{\xi'}{\xi} .$$

12. Control system (SYS) according to Claim 11, further comprising a unit (OPS) for determining an optimum value for the setpoint slip ($s_{setp}$).

**Revendications**

1. Procédé d'adaptation de la pression ($pc_{,ist}$ ; $pc_1$, $pc_2$, $pc_3$, $pc_4$) de cylindre d'un frein pneumatique d'un véhicule (FZG) ferroviaire,
dans lequel pendant une opération de freinage

    - on détermine le patinage ($S_{ist}$) réel instantané entre au moins une roue (2) du véhicule (FZG) ferroviaire et un rail (3),
    - on prescrit en outre un patinage ($s_{soll}$) de consigne entre la au moins une roue (2) et le rail (3), et

en fonction de l'écart entre le patinage ($S_{ist}$) réel et le patinage ($S_{soll}$) de consigne prescrit, on détermine une pression ($p_{soll}$) de cylindre de frein de consigne au moyen d'un régulateur (SRE) de patinage et

    - on mesure la pression ($pc_{,ist}$ ; $pc_1$, $pc_2$, $pc_3$, $pc_4$) de cylindre d'un frein réelle instantanée et on l'adapte à la pression ($p_{soll}$) de cylindre de frein de consigne déterminée de manière à rendre nul ou à minimiser l'écart entre le patinage de consigne et le patinage réel, et
    - dans lequel, pour l'adaptation au véhicule ferroviaire, on effectue une mise à jour d'un facteur ($K_{Ri}$) de transmission du régulateur (SRE) de patinage, le facteur ($K_{Ri}$) de transmission étant calculé, après détermination d'un facteur ($\xi$) d'état de frein du véhicule ferroviaire, qui s'effectue à partir de valeurs de mesure mesurées en continu, dans une opération de freinage stable, sur un rail sensiblement plan et droit, de la vitesse ($\omega_i$) d'essieu et de la pression ($P_{c,i}$) du cylindre de frein d'une paire de roues (i) avec le rayon (R) de roulement, conformément à la relation suivante :

$$\xi = -\frac{R\,\dot{\omega}_i}{p_{C,i}}$$

au moyen d'un facteur ($K'_{Ri}$) de transmission connu d'un véhicule de référence et d'un facteur ($\xi'$) d'état de frein connu ou calculé du véhicule de référence conformément à la relation

$$K_{R,i} = K'_{R,i}\,\frac{\xi'}{\xi}$$

2. Procédé suivant la revendication 1, **caractérisé en ce que** l'on prescrit une valeur fixe du patinage ($S_{soll}$) de consigne.

3. Procédé suivant la revendication 1, **caractérisé en ce que** l'on peut prescrire de manière variable la valeur du patinage ($S_{soll}$) de consigne.

4. Procédé suivant la revendication 3, **caractérisé en ce que** l'on détermine le patinage ($S_{soll}$) de consigne dans le cadre d'un essai de patinage optimum.

5. Procédé suivant l'une des revendications 1 à 4, **caractérisé en ce que** l'on choisit le patinage ($S_{soll}$) de consigne dans la plage du micropatinage.

6. Procédé suivant l'une des revendications 1 à 4, **caractérisé en ce que** l'on choisit le patinage ($S_{soll}$) de consigne dans la plage du macropatinage.

7. Procédé suivant l'une des revendications 1 à 6, **caractérisé en ce que** l'on mesure le patinage ($S_{ist}$) réel en permanence pendant toute l'opération de freinage.

8. Procédé suivant l'une des revendications 1 à 7, dans lequel, lors de la mesure de vitesses d'essieu sur q essieux et de pressions de cylindre de frein sur $l$ essieux on utilise la relation suivante pour la détermination du facteur ($\xi$) d'état de frein.

$$\xi = -R\,\frac{\dfrac{1}{q}\displaystyle\sum_{i=1}^{q}\dot{\omega}_i}{\dfrac{1}{l}\displaystyle\sum_{i=1}^{l}p_{C,i}}$$

9. Procédé suivant l'une des revendications 1 à 8, **caractérisé en ce que** l'on enregistre à m instants différents des valeurs de mesure, on détermine les facteurs $\xi(k)$ d'état de frein à ces instants et on effectue une formation de moyenne des facteurs $\xi(k)$ d'état de frein

$$\overline{\xi} = \frac{1}{m}\sum_{k=1}^{m}\xi(k)$$

10. Procédé suivant la revendication 1, **caractérisé en ce qu'**en présence d'une valeur de mesure réelle de la masse (M) totale du véhicule, on utilise la relation suivante

$$K_{R,i} = K'_{R,i} \frac{\xi'}{\xi} \frac{M}{M_0} \qquad ,$$

dans laquelle (M) est la masse instantanée du véhicule ferroviaire et $M_0$ est la masse, qu'a le véhicule (FZG) ferroviaire pendant la détermination du facteur ($\xi$) d'état de frein.

11. Système (SYS) de régulation comprenant

- un régulateur (SRE) de patinage, par lequel, pour l'adaptation du patinage ($S_{ist}$) réel à un patinage ($S_{soll}$) de consigne pouvant être prescrit, une pression ($p_{soll}$) de cylindre de frein de consigne est déterminée,
- un régulateur (PRE) de cylindre de frein, qui est conçu pour adapter la pression ($pc_{ist}$) de cylindre de frein instantanée à la pression ($p_{soll}$) de cylindre de frein de consigne déterminée,

ainsi que

- une unité (23) de calcul du facteur ($\xi$) d'état de frein,
- dans lequel le système (SYS) de régulation est conçu pour effectuer pour l'adaptation au véhicule ferroviaire une mise à jour d'un facteur ($K_{Ri}$) de transmission du régulateur (SRE) de patinage, le facteur ($K_{Ri}$) de transmission étant calculé, après détermination d'un facteur ($\xi$) d'état de frein du véhicule ferroviaire, qui s'effectue à partir de valeurs de mesure mesurées en continu, dans une opération de freinage stable, sur un rail sensiblement plan et droit, de la vitesse ($\omega_i$) d'essieu et de la pression ($P_{c,i}$) du cylindre de frein d'une paire de roues (i) avec le rayon (R) de roulement, conformément à la relation suivante :

$$\xi = -\frac{R \dot{\omega}_i}{p_{C,i}}$$

au moyen d'un facteur ($K'_{Ri}$) de transmission connu d'un véhicule de référence et d'un facteur ($\xi'$) d'état de frein connu ou calculé du véhicule de référence conformément à la relation

$$K_{R,i} = K'_{R,i} \frac{\xi'}{\xi}$$

12. Système (SYS) de régulation suivant la revendication 11, comprenant en outre une unité (OPS) de détermination d'une valeur optimum du patinage ($S_{soll}$) de consigne.

FIG. 1

FIG. 2

EP 1 874 601 B2

## Fig. 3

## Fig. 4

## Fig. 5a

Radsatz $i$

$$\frac{n}{\lambda MR}$$ ⟨5

⟨4

$T_{B,i}$ → | | $u_i$ → | Rad - Schiene Dynamik | → $s_i$

## Fig. 5b

Radsatz $i$ mit Bremssystem

$\xi$ ⟨6

⟨4

$p_{C,i}$ → | | $u_i$ → | Rad - Schiene Dynamik | → $s_i$

## Fig. 6a

$\xi'$ 8

$u_i$

7

Rad - Schiene
Dynamik
(Referenzfahrzeug)

$s_i$

1 9

$p_{C,i}$

Bremszylinder mit
Gleitschutzventilen
(Referenzfahrzeug)

$y_i$

$K'_{R,i}$ 10

Referenz-
Regler

−

$s_{soll,i}$

## Fig. 6b

$\xi$ 6

$u_i$

4

Rad - Schiene
Dynamik

$s_i$

1 11

$p_{C,i}$

Bremszylinder mit
Gleitschutzventilen

$y_i$

$K'_{R,i} \cdot \dfrac{\xi'}{\xi}$ 12

Angepasster
Regler

−

$s_{soll,i}$

## Fig. 7

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2530609 A1
- EP 0818372 A2
- DE 19848992 A1
- DE 19519767 A1

**In der Beschreibung aufgeführte Nicht-Patentliteratur**

- **U. KIENCKE.** Realtime Estimation of Adhesion Characteristic between Tyres and Road. *Proceedings of the IFAC World Congress,* Juli 1993, vol. 1, 15-18